# EUROPEAN PATENT APPLICATION

(11) **EP 2 628 531 A2**
(43) Date of publication of application: **21.08.2013**
(21) Application number: 13155315.8
(22) Date of filing: 14.02.2013
(51) Int. Cl.: B01J 13/18, A01N 25/28, A23P 1/04, A61K 8/11, A61K 9/50, C09B 67/00, B01J 13/14, B01J 13/20

(54) **Method for the polymeric encapsulation of intercalation compounds composed of lamellar solids and dyes**

(30) Priority: 15.02.2012 IT PG20120005
(71) Applicant: Ferrini - Societa' a Responsabilita' Limitata, 06089 Torgiano (PG) (IT); Prolabin & Tefarm S.R.L., 06127 Perugia (PG) (IT)
(72) Inventor: Spogli, Roberto, 06122 Perugia (PG) (IT); Sisani, Michele, 06125 Perugia (PG) (IT); Latterini, Loredana, 06053 Deruta (PG) (IT)
(74) Representative: Cutropia, Gianluigi

(57) **Abstract**

The method of polymeric coating of intercalation compounds consisting of lamellar solids and dyes for coloring and/or staining surfaces and materials of different nature, includes the following steps:
a) intercalation and/or absorption of dyes inside lamellar solids to obtain a lamellar solid intercalated with dyes,
b) polymer coating of the above-mentioned lamellar solid intercalated with dyes to obtain a microcapsule totally coated with a polymeric film and with an essentially spherical shape and a diameter lower than 100 microns.

## Description

The invention refers to a method of applying a polymeric coating on intercalation compounds consisting of lamellar solids and dyes, in order to dyeing and/or colour surfaces and materials of different nature. The materials of interest from an application point of view of application can be classified in the following categories: polymers, both thermoplastic and thermosetting; rubbers and resins; wood and paper; metals; glass and ceramics.

In many cases, the coloration of these materials represents a critical step of the production process for several reasons:
1) In some cases the coloration must be done at the beginning of the industrial process, using specific additives.
2) When the materials are coloured at the end of the industrial process, it is necessary the use of paints, pigments or coatings which require a solvent.
3) The classical coloration process requires the use of electrostatically charged pigments and paints, which are sprayed on the surface of the industrial products in order to optimize their deposition, but this technique has great limitations when it is used for insulating materials (plastics, resins, polymers, etc), since in this case conductive primers must be applied on the product before painting to obtain a good surface coating. However, even with this precaution, the coating process must be repeated several times to have a good quality of dyeing.
4) Molded and irregular shaped products are difficult to dye and the resulting coloration is often significantly not homogeneous.
5) The water-soluble dyes cannot be used to color the manufactured objects, because they do not have an optimal adhesion to the material surface.
6) Temperature and light-sensitive dyes (fluorescent or not) used for the coloration of the manufactured objects have low stability and durability. Their lifetime generally depends on the storage conditions and the use of the materials. When the manufactured objects containing photosensitive dyes are exposed to light (natural or artificial), signs of colour degradation are visible in a few days.

It is known that some lamellar solids are capable to adsorb/intercalate different dyes some of which having additional thermochromic, photochromic and fluorescent properties, and as a result of the incorporation in the lamellar solid, these coloured species are protected from photochemical, thermal and chemical degradation such as hydrolysis or oxidation. Moreover, the intercalation in the lamellar solid does not allow a direct contact between the dye and the environment, thus drastically reducing the onset of allergic reaction or skin sensitization and the alteration of the surfaces on which the intercalation compounds are deposited.

DE 20 2009 0080 15 U1 has the aim to produce luminescent or fluorescent lamellar silicates (belonging to the category of lamellar solids) for application in the bioanalysis field. In this context, the prepared materials must bind to proteins. The lamellar solid is functionalized with pendant gruos suitable for protein binding. These pendants are covalently linked to the lamella of the intercalation compound. The main goal of the invention is to produce diagnostic kits, that do not involve in the preparation process washing steps with surfactants or other detergents commonly performed in the case of coloured surfaces.

The scientific publication WPI AN 2011-E30391 describes the use of hydrotalcites to intercalate a pigment (curcumin 17, or AY17) in order to increase its thermal and photo stability. This pigment is used to dye wool and silk. The intercalation compound between hydrotalcite and curcumin has been prepared to increase the stability of the molecule inside the inorganic matrix. However, this system has significant limitations if used as colouring agent because it does not prevent dye release upon washing or rubbing.

From the above mentioned publications, it emerges the total absence of a technology similar to the one proposed in the present invention that allows the coloring of surfaces using dyes intercalated and/or adsorbed in lamellar solids, which are firmly anchored to the surface due to the presence of a suitable polymeric coating capable of stably bind to the surface.

The aim of the present invention is providing an efficient and effective method to coat intercalation compounds consisting of lamellar solids and dye with a polymer that solves the problems associated with the existing technology and that allows a stable surfaces coloration even after further treatments, washing steps, mechanical stress, wear or weathering. This goal is achieved in agreement to the invention with the characteristics listed in the enclosed independent claim 1. Profitable connections of the invention appear from the dependent claims.

The present invention refers to a method to coat intercalation compounds consisting of lamellar solids and dye with a polymer including the following steps:
a) intercalation and/or adsorption of dyes in lamellar solids to obtain a lamellar solid intercalated with dyes, and
b) polymeric surface coating of the above-mentioned lamellar solid intercalated with dyes to obtain a microcapsule totally coated with a polymeric film having an essentially spherical shape.

The lamellar matrices belong to the class of hydrotalcites or anionic clays, also known as lamellar double hydroxides, or the class of zirconium phosphates/phosphonates.

The dyes can be thermolabile, photosensitive or stable, either fluorescent or non-fluorescent.

The polymer coatings are constituted of light transparent polymers and may vary depending on the type of material to color; indeed the polymer must have characteristic and specific reactive groups which can interact with the material to be colored and anchor permanently to it.

The method as developed in the present invention has the following amazing advantages:
1) it avoids the use of additives and allows the coloration of the manufactured objects at the end of the industrial process and directly on the final product.
2) it does not require hazardous solvents, but it uses only water for dispersing the microcapsules.
3) it allows to have an excellent colour adhesion even on insulating materials, simply taking advantage of the specific interactions between the polymer coating and the surface of the material to colour.
4) it allows to colour objects of irregular shape, because the particles interact identically over the entire surface of the material, also the size of the microcapsules (less than 100 microns) allow the colour anchoring even on shaped curved or porous surfaces.
5) it allows to use all the dyes, even and especially the water-soluble ones, since the coating produced by the microcapsule allows the complete isolation of the dye from the external environment preventing its release.
6) it allows the use of thermo-and photosensitive dyes, because the intercalation process protects them from light, oxidation and it increases the thermal stability.

### BRIEF DESCRIPTION OF THE FIGURES

Figure 1. Schematic diagram of the intercalation of the dye in the lamellar solid and schematic illustration of the lamellar solid functionalization according to the grafting and surface coating method.

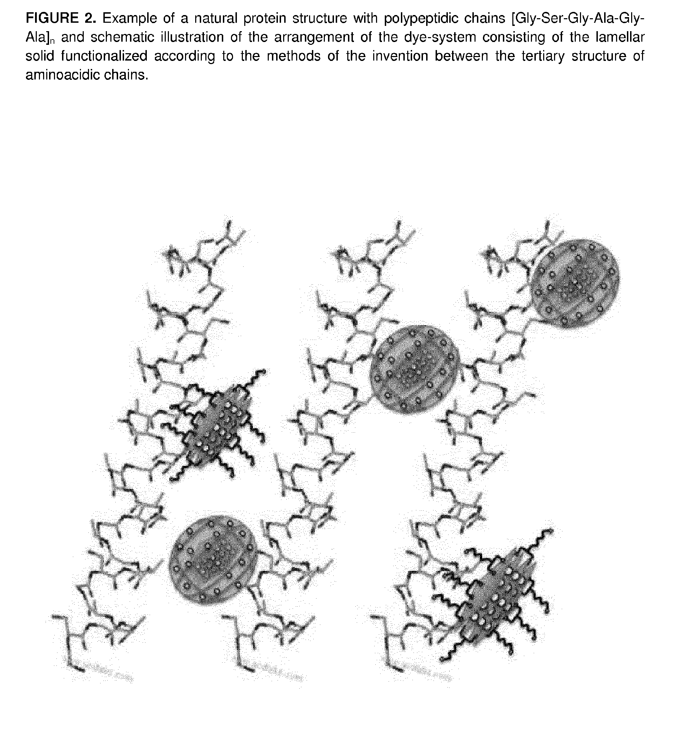

Figure 2. Example of the structure of a natural protein with polypeptide chains structure [Gly-Ser-Gly-Ala-Gly-Ala]ₙ and schematic illustration of the arrangement within the amino acid chains of the system constituted by the dye functionalized lamellar solid prepared according to the methods described in the present invention.
Figure 3. Three-dimensional molecular models obtained with HyperChem program, which illustrate the molecular arrangement of zinc aluminum hydrotalcite intercalated with fluorescein, and zinc aluminum hydrotalcite intercalated with methyl orange.

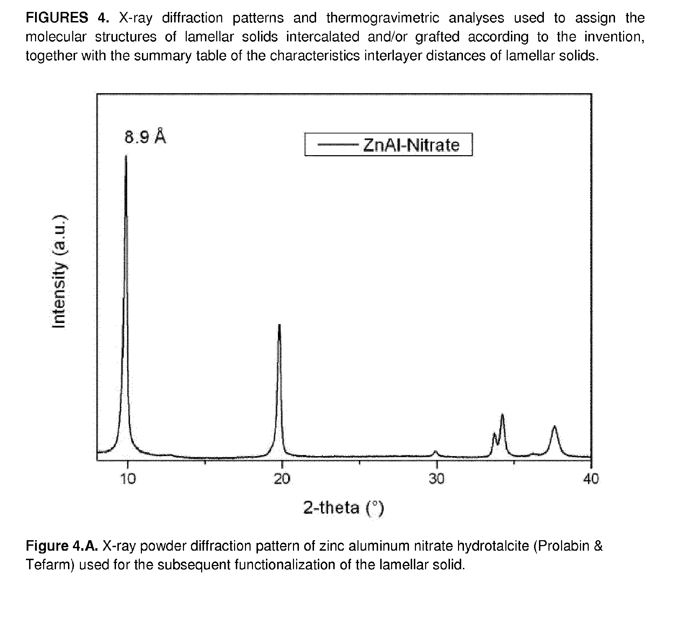

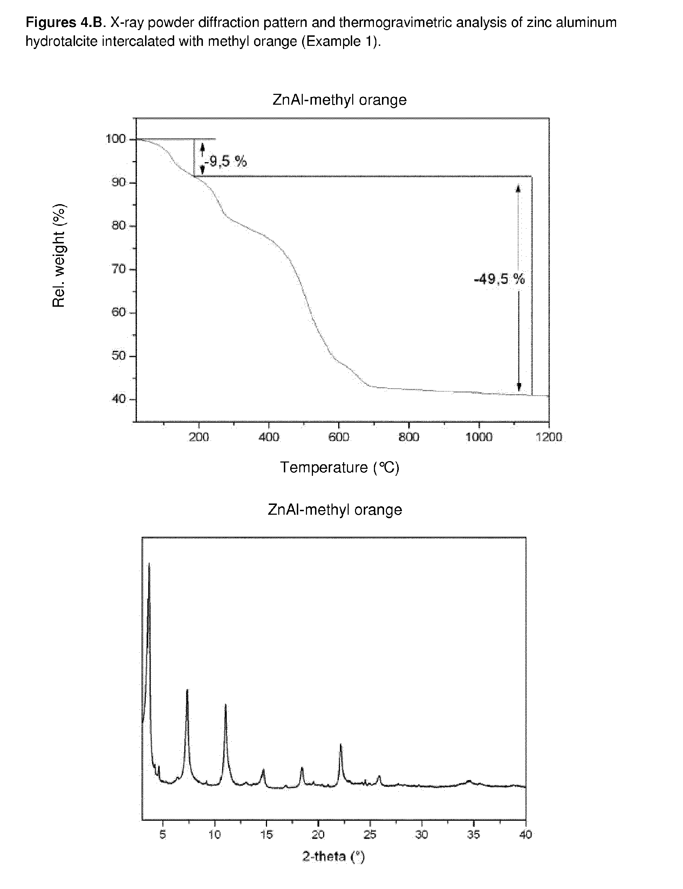

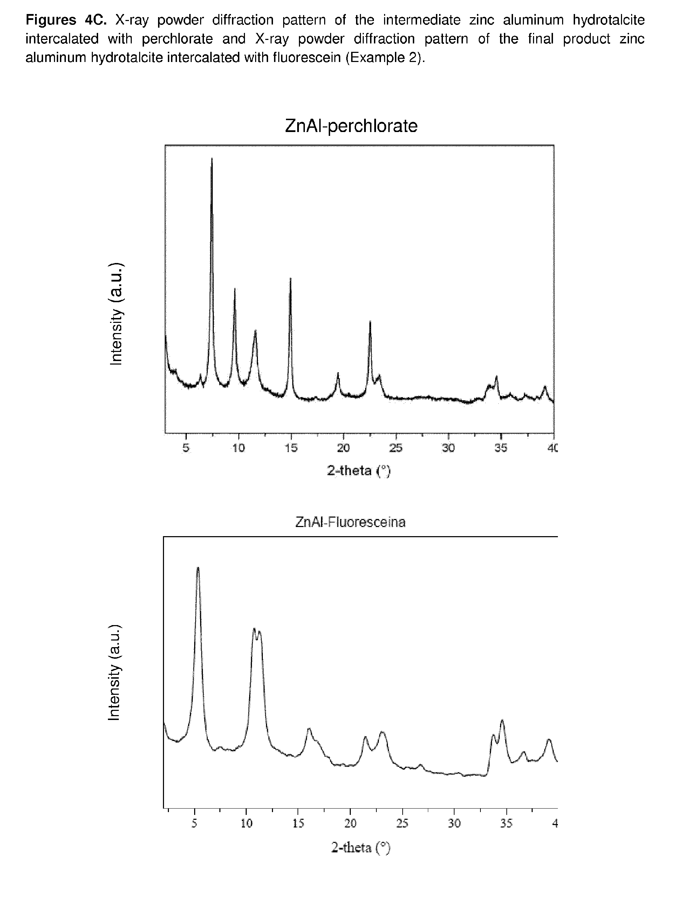

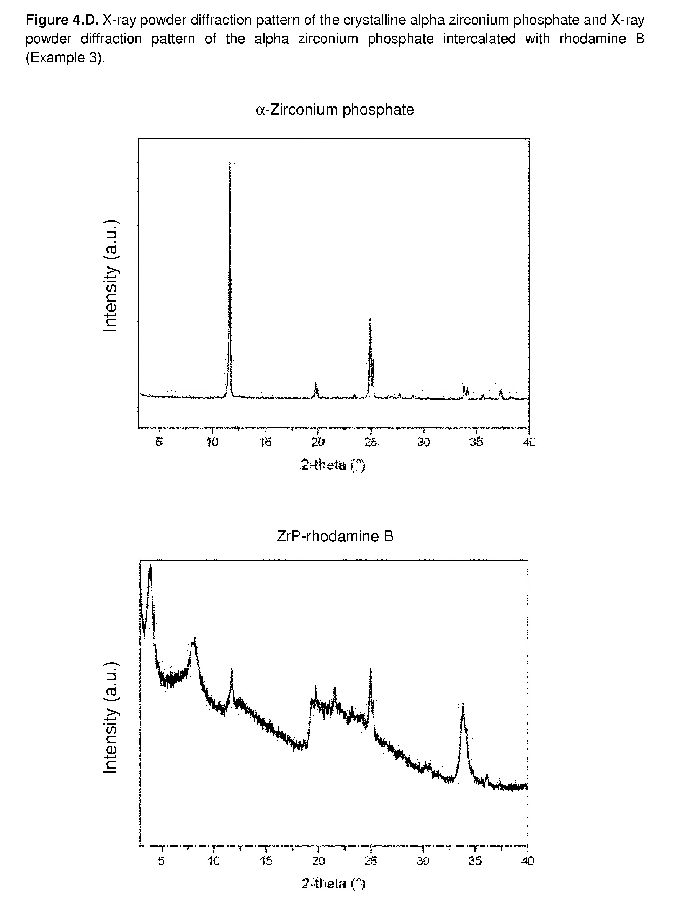

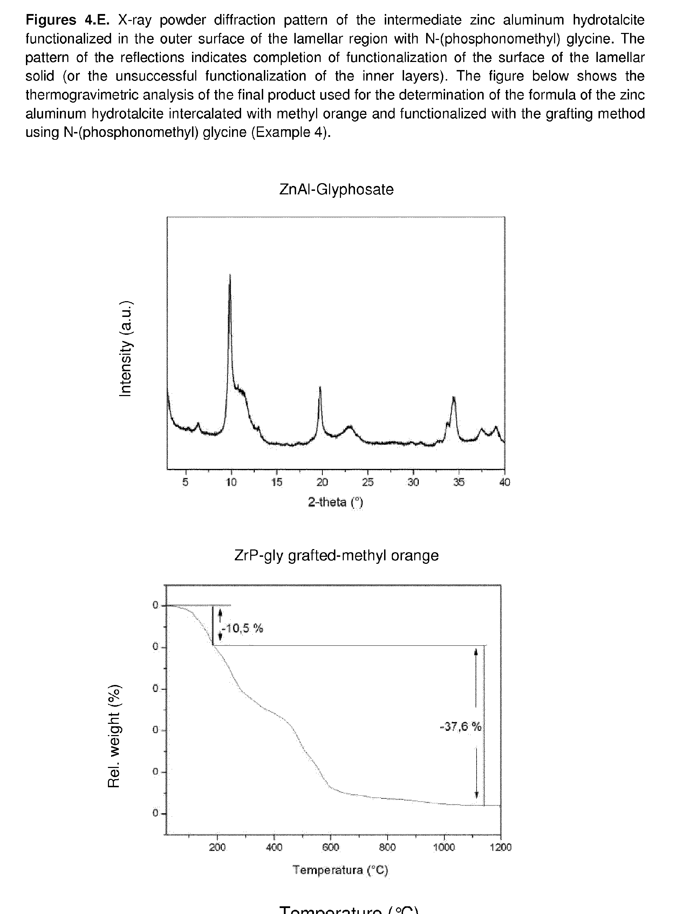

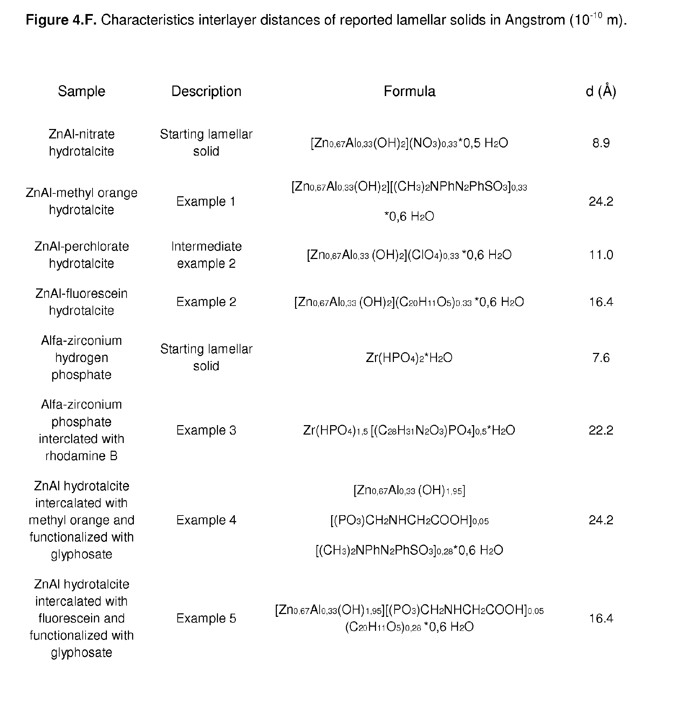

Figures 4. X-ray diffraction spectra and thermogravimetric analysis used to assign the molecular structures of the intercalated and/or grafted lamellar solids according to the invention, together with the summary table on the interlayer distance characteristics of the lamellar solids. Figure 4.A. X-ray powder diffraction pattern of the zinc aluminum nitrate hydrotalcite (Prolabin & Tefarm) used for the following functionalization of the lamellar solid. Figure 4.B. X-ray powder diffraction pattern and thermogravimetric analysis of the zinc aluminum hydrotalcite intercalated with methyl orange (Example 1). Figure 4C X-ray powder diffraction spectra of the zinc aluminum hydrotalcite intercalated with perchlorate and of the final product zinc aluminum hydrotalcite intercalated with fluorescein (Example 2). Figures 4.D. X-ray powder diffraction spectra sample of crystalline alpha zirconium phosphate and of the intercalation product of alpha zirconium phosphate intercalated with rhodamine B (Example 3). Figures 4.E. X-ray powder diffraction pattern of the zinc aluminum hydrotalcite functionalized on the lamellar external surface with N-(phosphonomethyl) glycine. The diffraction spectrum confirms the functionalization of the outer surface of the lamellar solid, and the absence of further reflections demonstrated that no intercalation in the inner layers occurred. Thermogravimetric analysis of the final product for the assignation of the chemical formula for the zinc aluminum hydrotalcite intercalated with methyl orange and functionalized with N-(phosphonomethyl) glycine through the grafting method (Example 4). Figure 4.F. Characteristics interlayer distances of lamellar solids in angstroms (10⁻¹⁰m).

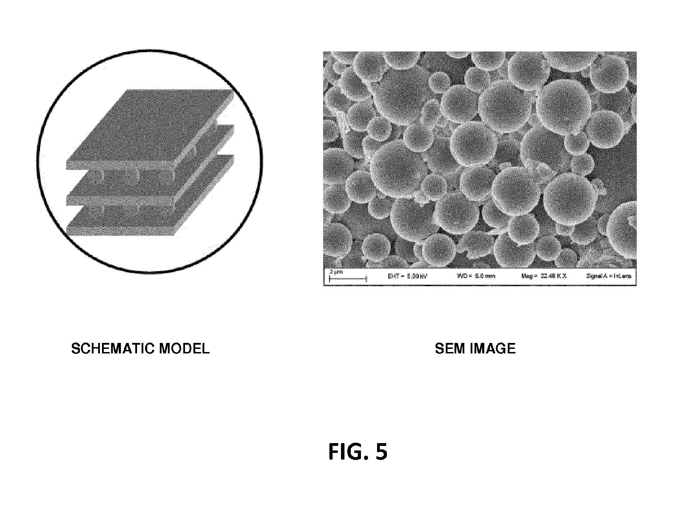

Figure 5. illustrates a schematic view and a Scanning Electron Microscope (SEM) image of the microcapsules constituted by the intercalation compound (lamellar solid/ fluorescent dye) coated with polyethyl methacrylate.

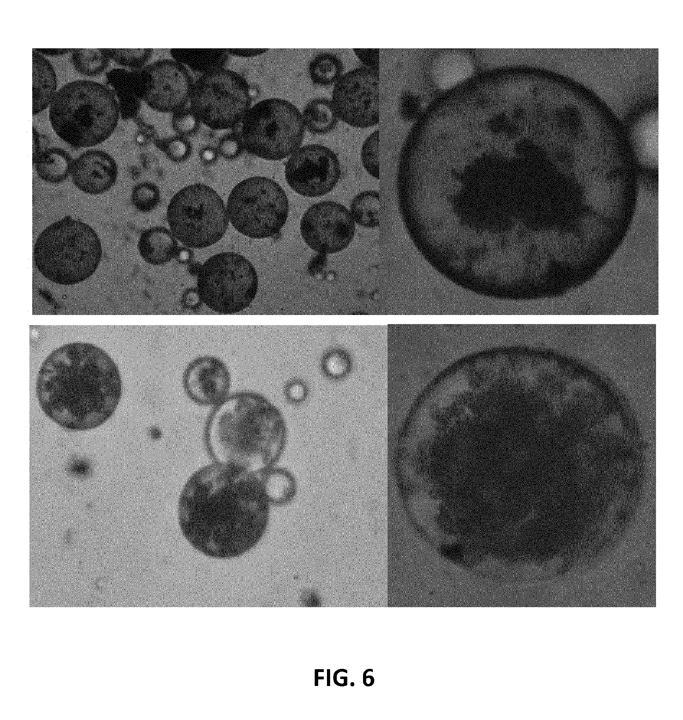

Figure 6. shows two optical microscope images of the microcapsules constituted by the intercalation compound (lamellar solid/ fluorescent dye) coated with polyethylmethacrylate with dyes of different colours.

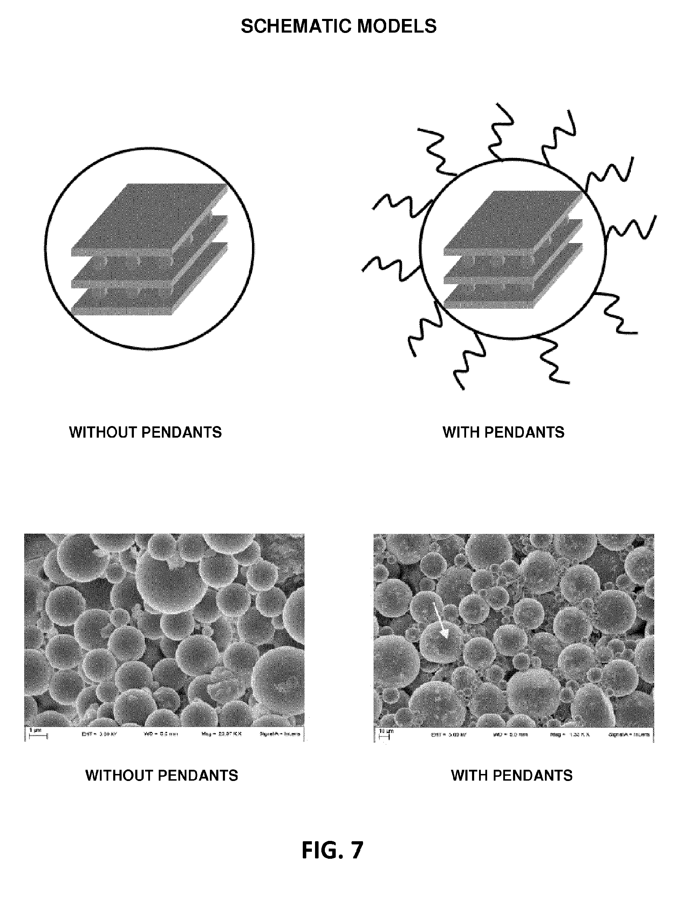

Figure 7. illustrates a schematic view and a relative SEM images of microcapsules constituted by the intercalation compound coated with polyethylmethacrylate (left) and microcapsules constituted by the intercalation compound coated with polyethylmethacrylate having polyvinylpyrrolidone pendants necessary to anchor the fiber (right).

### DETAILED DESCRIPTION OF THE INVENTION

In the context of the present invention the following definitions will be used with the meanings described below:
Lamellar solid is an inorganic compound containing no organic carbon, which, due to its chemical structure, forms a solid spatially arranged as a succession of lamellae, i.e. crystals with a dimension much smaller than the other two (see Chapter 1, Volume VII of Comprehensive Supramolecular Chemistry, Pergamon Press, Oxford, 1996). If the lamellae have an electric charge (positive or negative), oppositely charged ions are positioned in the interlayer region in order to preserve the electrical neutrality of the solid. These ions may be replaced by dye molecules in ionic form, by means of ion exchange reactions;
Intercalation compound is the material that is obtained as a result of functionalization (intercalation) of molecules or atomic or molecular ions in the interlayer region of the lamellar solids;
Package of lamellae is a set of overlapping lamellae, oriented as paper sheets of a ream, which constitutes a lamellar solid particle.
Intercalation site is the site of the inorganic compound where the net charge (positive or negative depending on the type of inorganic compound) is present, which will be neutralized by the dye molecule in ionic form;
Dye is any chemical substance which has the ability to confer a particular colour to a particular substrate by either absorption of a portion of the visible light and reflection of the remaining fraction or emission of a specific portion of the visible light.

The method of polymer coating according to the invention involves the use of a complex system consisting of inorganic lamellar solids functionalized with dyes, coated and modified to promote the binding of the system to substrates of different nature.

The inorganic lamellar solid intercalated with dyes is characterized by the fact that the dye molecules are supported on the lamellae of the inorganic solid through ionic bonds, and the resulting lamellar solid - dye system is called intercalation compound.

To the effects of the invention, among the inorganic lamellar solid having intercalation ability (See Chapter 1, Volume VII of Comprehensive Supramolecular Chemistry, Pergamon Press, Oxford, 1996), it will be considered only those with negative charge of the lamella, counterbalanced by cations inserted in the interlayer region (so-called cationic lamellar solids) and those with positive charge, counterbalanced by anions inserted in the interlayer region, (so-called anionic lamellar solids) (interlamellar and interlayer are considered synonyms). Among the first group, cationic clays (montmorillonite, vermiculite, fluorohectorite, bentonite) and zirconium or titanium phosphates may be mentioned, which through a cationic exchange process are capable of intercalating dyes containing a functional group that can be converted into a cation, typically an amino group easily protonatable in order to form a quaternary ammonium cation. Among the second group, synthetic hydrotalcites also known as anionic clays or lamellar double hydroxides (referring to two cations present in the layers) should be considered, for example Mg₆Al₂(OH)₁₆CO₃, which through an anion exchange process may intercalate dyes with anionic functional groups, typically carboxylic, phenolic, sulfonic, phosphonic groups.

Lamellar solids preferable for the intercalation of anionic dyes are the Mg - Al or Zn - Al synthetic hydrotalcites with a molar ratio Mg (Zn) / Al ranging from 1.5 to 4 and with an anionic exchange capacity ranging from 2 to 5 milliequivalents / gram (meq/g). These types of hydrotalcites are preferable because zinc and magnesium are particularly inert and safe for the human health [1) C. Del Hoyo, "Layered double hydroxides and human health: An overview ", Applied Clay Science 36 (2007) 103-121. 2) Jae-Min Oh, ab Timothy T. Biswicka and Jin-Ho Choy, "Layered nanomaterials for green materials ", J. Mater. Chem., 2009, 19, 2553-2563] and have a low environmental impact, moreover they are also relatively inexpensive and suitable for industrial manufacturing.

Other lamellar solids desirable for the intercalation of cationic dyes of are the alpha and gamma synthetic zirconium phosphates. They are preferable because of their chemical stability, low cost, and their inertia and safety for human health (Roming M. et al., ZrO(HPO4)1-x(FMN)x: Quick and Easy Synthesis of a Nanoscale Luminescent Biomarker Angew. Chem. Int. Ed 2010, 49, 632 -637; A. Diaz et al. Nanoencapsulation of Insulin into Zirconium Phosphate for Oral Delivery Applications, Biomacromolecules 2010, 11, 2465-2470).

In the case of hydrotalcites, the lamellar solid structure derives from the brucite Mg (OH)₂ through isomorphous substitution of Mg / Al, which creates an excess positive charge, balanced by the anions present in the interlayer region (for example Cl⁻ or NO₃⁻). The charge depends on the extent of Mg/Al substitution and is expressed as charge density, which gives the anion exchange capacity (meq/g). The general formula of synthetic hydrotalcites or lamellar double hydroxides can be written as (I):

[M(II)₁₋ₓM(III)ₓ(OH)₂]^{x+}[Aⁿ⁻_{x/n}]^{x-} ×mS (I)

where M(II) is a metal of valence (II) preferably selected from Mg, Zn, Co, Ni, Mn, Cu; M(III) is a metal of valence (III) preferably selected from Al, Cr, Fe, V, Co; Aⁿ⁻ is an anion of negative charge n, balancing the positive charge, m is the number of co-intercalated (S) solvent molecules per formula unit of the compound, generally water. The number of cation moles of the metal M (III) by formula weight of the compound usually ranges between 0.20 and 0.40 and its value determines the charge density of the layer and thus the anion exchange capacity. The number of moles of solvent co-intercalated, m, is generally between 0 and 2, depending on the nature of A and the degree of intercalation (for example 0.6 H₂O).

The zirconium phosphates are acid lamellar materials characterized by high chemical and thermal stability with the ability to incorporate different types of molecules of various sizes in the interlayer region. There are different phases of zirconium phosphate which have distinct interlayer distances and crystal structures. Among them, alpha and gamma phases are the most commonly used and their formulas are shown below:

alpha Zr(HPO₄)₂•H₂O

gamma Zr(PO₄)(H₂PO₄)•2H₂O

Once intercalated with a cationic dye having generic formula Bⁿ⁺ and net charge n, the formulas of zirconium phosphates become:

alpha Zr(HPO₄)₂₋ₙₓ[(Bⁿ⁺PO₄)ₓₙ]•H₂O

gamma Zr(PO₄)(H₂PO₄)₁₋ₙₓ[(Bⁿ⁺HPO₄)ₓₙ]•2H₂O

The number of moles x for formula weight of the compound generally varies between 0.1 and 2 in the case of alpha type phosphates and between 0.1 and 1 in gamma type phosphates, and its value determines the degree of ionic exchange.

The preparation of the lamellar solid intercalated with the dye includes the intercalation step of the dye molecules inside inorganic lamellar solid structure, usually by means of a ion exchange reaction, which allows the introduction of the chosen dye in the interlayer region of the inorganic lamellar solid (molecule - inorganic solid complex, also referred as intercalation compound). The process is carried out according to well-known procedures, as described for example in Z. Kristallogr. 224 (2009) 273-281 / DOI 10.1524/zkri.2009.1153, which involve dispersing the chosen lamellar solid powder in a solution containing the dye in the ionic form. The exchange usually takes place after stirring the solution at a fixed temperature and using volumes of solution and concentrations of the reagents suitable for obtaining the partial or complete exchange of the ions present in the starting solid with the active ingredient.

The state of the art provides that lamellar solid /dye complexes in which the lamellar solid is a synthetic hydrotalcite, can also be obtained with the procedures known as direct precipitations, i.e., precipitation of the double hydroxides in the presence of the active principle in anionic form, and reconstruction of the lamellar structure starting from the mixed oxides in an aqueous solution containing the active substance (see: F. Cavani, F. Trifirò, A. Vaccari, Catal. Today, 11 (1991) 173).

The intercalation compound may be characterized through thermogravimetric analysis, that allows to obtain the amount of inorganic residue after thermal degradation at 800 °C (the amount of dye in the mixture is calculated by difference), X-ray diffraction analysis and UV-spectrophotometry that allows to acquire direct evidence of the dye intercalation.

The choice of the lamellar inorganic solid is made according to the type of material, its surface, the dyeing technique and in particular the type of dye. Once the dye has been chosen, the parameters that can be changed are:
1. Type of lamellar inorganic solid. Solids with lamellar negative charge (smectic clays, lamellar Zr (Ti) phosphates) will be used for cationic dyes agents, solids with lamellar positive charge (natural or synthetic hydrotalcites) will be used for anionic dyes. Both types of solids are in microcrystalline powder form with dimensions which may vary typically in the range of 0.01-100 µm, preferably 0.1-50 µm, or most preferably 1-20 µm.
2. Charge density. The maximum dye loading in the lamellar solid can be tuned (from 2 to 5 or 2 to 4 mmol/g) by modifying the charge density. It is possible to prepare hydrotalcites with different charge densities by using synthetic procedures according to the present state of the art; these procedures allow to vary the M(III)/M(II) metal ratio which brings to a modification on the x parameter in the general formula (I) shown above in the text.
3. The extension of the ion-exchange reaction, that involves a different exchange degree and different dye loading. Therefore it is possible to obtain only a partial exchange of the anions or protons in the lamellar solid with the dye. For example, if the ion exchange capacity of the hydrotalcite is 0.37 moles per mole of compound, it can load the active molecule up to 0.37 moles, but the loading can be stopped even at lower values (eg. 0.20 moles per mole of compound).

Organic molecules belonging to the class of azo dyes, acridones, xanthenes, flavins, quinones, anthraquinones, triaryl-methanes, cyanines, perylenes, diarylethenes, spyrobenzopyrones, chromenes, fulgides, can be used as organic dyes to intercalate into inorganic matrices discussed in the present invention. In detail, some of the possible molecules or organic dyes that can be used according the invention are:
phenolphtalein, rhodamine, xylenol orange, fluorescein, methyl orange, phenyl-azobenzene, eosin.

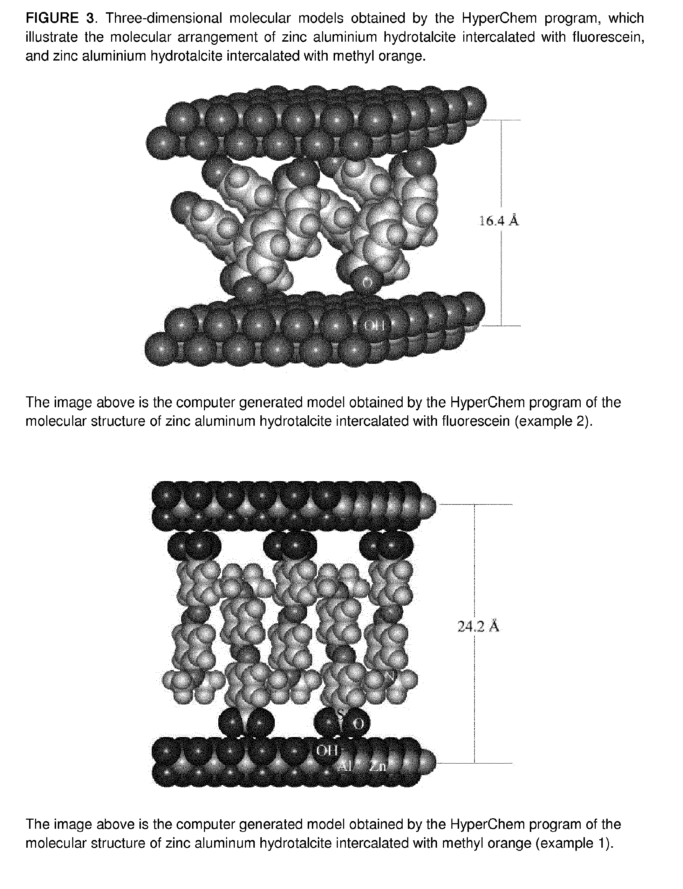

Dye intercalations in lamellar solids are described in Examples 1, 2 and 3. Figure 3 shows the structure modeled with computer.

Using directly lamellar solids intercalated with dyes for dyeing the natural protein fiber present a problem: the solids are not strongly anchored to the fiber protein. In fact, the inorganic matrix of the solid is not suitable for stably bind to the protein structure due to its chemical. Stronger chemical treatments can not be used because of possible damage to the natural fiber protein. Using these systems (lamellar inorganic solids intercalated with dyes) for direclty tinting natural fibers protein are obtained products that quickly lose the color with normal washing processes, (see Table 1, No. 2) due to poor adhesion of these systems to natural fibers protein.

Two methods have been developed to solve the problem described above and allow the anchorage between the intercalation compound and the natural protein fiber. These methods concern the engineering of the intercalation compound through a secondary functionalization, where for primary functionalization has to be intended the dye intercalation.

The first method involves the modification of the lamellar solid before dye intercalation and it is named METHOD OF GRAFTING, the second method provides the modification of the lamellar solid after the intercalation reaction and it is named METHOD OF SURFACE COATING.

The method of grafting is based on the functionalization of the external surface of the solids. The functionalization is made with alkyl pendants covalently bonded to the external surface of a package of lamellae. Moreover the alkyl pendants posses functional groups capable of anchoring to different materials selectively and permanently. The alkyl pendants present terminal phosphonic groups suitable to give a particular chemical reaction named grafting. In the grafting reaction a covalent bond is achieved between a phosphonic group of an alkyl pendant and an hydroxyl moiety of the lamellar solid with losing a molecule of water.Among lamellar solids hydrotalcites are more suitable for the method of grafting.
The formulas of generic structure of the pendant side are the following: 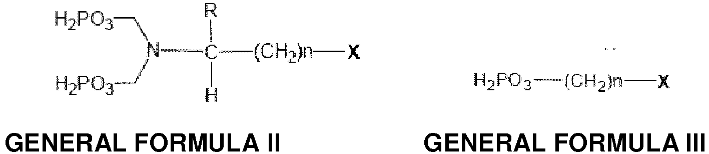 Where
X = COOH, SO₃H,
n = (0-24)
R = H, CH₃, SH, CH₂CH₂SH, OH, CH₂OH, CH₂CH₂OH, CH₂-(2-Imidazol), CH₂CH₂NHC(NH)NH₂, CH₂COOH, CH₂CONH₂, CH₂SH, CH(CH₃) CH₂CH₃, isopropyl, CH₂CH₂CH₂CH₂NH₂, CH₂CH₂SCH₃, benzyl, CH(OH)CH₃, CH(CH₃)₂.

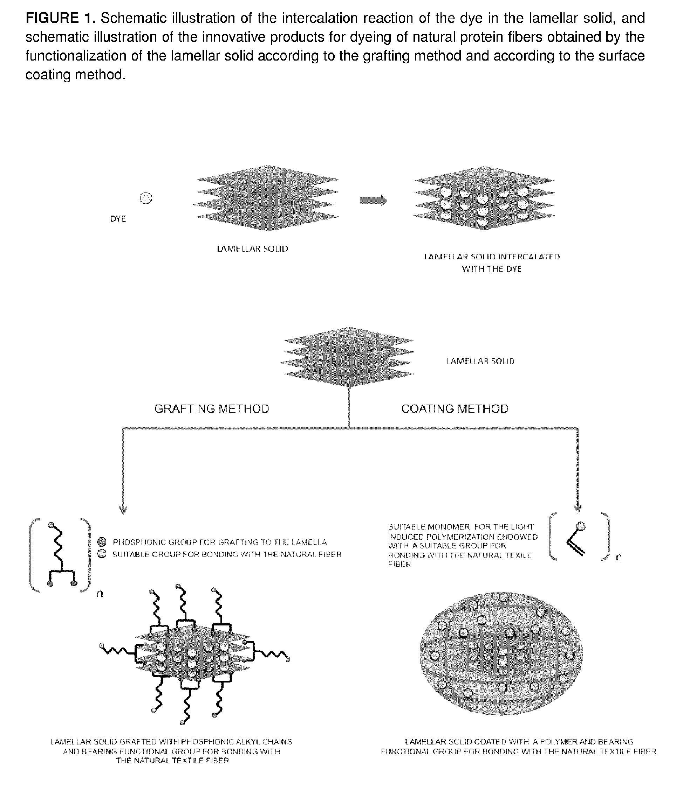

The lamellar solid is functionalized with the alkyl pendant by disperding the solid in a solution of water or water and organic solvent contaning the pendant alkyl. The amount of alkyl pendant is choosen in order to functionalize only the external lamellae of the lamellar solid (see figure 1).

This condition is reached by using a molar quantity of the pendant equal to 0.1-15% of the ion exchange capacity of the lamellar solid, preferably equal to 1- 10%, and more preferably equal to 3-7%. At low concentration of alkyl pendants, they functionalize only the surface of the lamellar solid, due to the following reasons: the high affinity of phosphonic groups towards the ion-exchange reaction, and the preferential accessibility of the phosphonic groups toward superficial exchange sites respect to inner exchange sites.

Then a thermal treatment, typically but not exclusively conducted during the drying of the functionalized lamellar solid (80 °C, 12 hours), leads to the grafting reaction that leads to a pendant linked covalently and irreversibly to the surface of the lamellar solids in the planned conditions.

The successful functionalization of the surface lamellar solid is confirmed by X-ray diffraction analysis, thermogravimetric analysis and infrared spectroscopy.

The remaining portion of ions, susceptible of ion-exchange reaction, are in the interlayer region of the lamellar solid, and they are functionalized with dyes, according to ion exchange procedures already known, see (Umberto Costantino, Natasha Coletti, Morena Nocchetti, Gian Gaetano Aloisi, Fausto Elisei), Langmuir, 1999, 15 (13), pp. 4454-4460, DOI:10.1021/la981672u.

Examples of preparation of hydrotalcites functionalized with the method of grafting and intercalated with dyes, according to the invention, are described in Examples 4 and 5. In Figures 4 are shown some X-ray diffraction spectra of powders and thermogravimetric analyses, that allowed to assign the structural formulas to dyes functionalized systems prepared with the method of the invention.

Similarly, phosphate and/or zirconium phosphonate lamellar systems can be functionalized by anchoring pendants with specific functional groups directly on the surface of the lamellae. In particular using phosphonic acids with general formula R-PO₃H₂, in which R represents a functional specific group, reactive pendants can be introduced in the lamellar solid which are able to selectively interact with particular substrates.

The generic group R may be inorganic or organic (either alkyl or aryl), while the terminal group of the pendant can have acid, basic or neutral functionality. As an example some terminal functional groups are listed below:

-OH,-COOH,-SH,-H,-CH₃,-CH₂Cl,-CN,-SO₃H,-NH₂-CH₂OH,-C₆H₅,-C₆H₄SO₃H,-C₅H₄N.

The surface coating method, according to the invention, consists in the functionalization of the outer surface of the package of lamellae of the inorganic solid already intercalated with dyes through coating with a polymeric film, in order to obtain a microcapsule containing the lamellar solid with the intercalated dye (Figure 1). The polymeric coating, which does not alter or attenuates the colour, is achieved through the polymerization technique caused by photoinduced crosslinking reactions.

The procedure involves the use of a water dispersion of the lamellar solid intercalated with the dye and mixed with monomers or oligomers, in which the weight percentage of the monomer/oligomer (% weight m.) compared to the weight percentage of the intercalated layered compound (% weight i.l.s) can vary in the following range: (% weight m.) is between 20-0.1 times greater than the (% Weight i.l.s), more preferably (% weight m.) is between 10 to 0.1 times greater than the (% Weight i.l.s), even more preferably (weight% m.) is between 5 to 0.1 times greater than (% Weight i.l.s).

The polymerization is triggered by irradiation of the monomer and intercalated lamellar solid suspension of monomer using a UV lamp, based on a low-pressure mercury bulb.

The monomer used is not exclusively vinyl-pyrrolidone or vinyl acetate; however, it is a vinyl type monomer able to realize a coating constituted by polyvinyl pyrrolidone (PVP) or, polyvinyl alcohol, or polyvinyl derivatives. Other convenient monomers according to the invention are vinyl carbonate and vinyl carbamate or their oligomers, methyl or ethyl acrylate, vinyl chloride, vinyl acetate and those belonging to the classes of anhydrides and functionalized styrenes. The oligomer used is PVP (type PVPK40).

In this case, the coating has on its surface polymeric pendants with specific functional groups able to anchor with multiple bonds, under normal use conditions, the lamellar solid -dye coating system to the surface to colour.

Examples of preparation of lamellar solids intercalated with dyes and functionalized with the surface coating method according to the invention are described in examples 6 and 7.

Surprisingly it has been found that systems such as lamellar solids intercalated with dyes and functionalized according to the invention are efficient agents for staining natural textile protein fibers including wool, silk and cashmere, and for the coloring of ceramics and cement.

The confinement of the dyes in the solid lamellar has a photoprotective effect useful for light-sensitive dyes and in particular those fluorescent and/or thermochromic and/or photochromic. The photoprotective effect of the lamellar solid is demonstrated in the case of rhodamine and fluorescein intercalated respectively in the alpha-type zirconium phosphate and zinc aluminum-type synthetic hydrotalcite.

Both the rhodamine and the fluorescein are fluorescent dyes subjected to rapid photodegradation, but as demonstrated by the absorption spectra after irradiation, the intercalation of this fluorescent dyes inside the lamellar solid increases their stability against light stimulation.

The parameters that have to be taken into account for the preparation of dyes based on lamellar solids according to the invention are:
Type of surface to be colored;
Type of lamellar inorganic solid, including hydrotalcites and zirconium phosphates;
Type of chemical properties of the dye used in the intercalation process, including those fluorescent, thermochromic and photochromic;

Concentration (loading) of the dye intercalated in the lamellar solid. This concentration can be typically tuned between 0.1 % and 40% by colorant weight with respect to the weight % of the inorganic matrix (lamellar solid); Weight percentage of lamellar solid functionalized with dye compared to the natural textile protein fiber. Typically the absolute percentage of dye with respect to the textile fiber can vary between the percentages by weight from 20 to 0.1 %, or more preferably from 8 to 0.25%, or most preferably from 3 to 0.5%;

Type of functionalization of the lamellar solid in order to optimize the adhesion on the surface to be colored. In the grafting method the pendant length and the type of functional group suitable for fiber anchoring can be modified, while, in the coating method, the type of polymer used to coat the microcapsules can be varied;

Type of dyeing/colouring process, whose conditions are chosen by the expert in the field according to his know-how.

Therefore it is clear that by appropriately choosing and controlling the parameters discussed above it is possible to produce finished goods useful for many different applications with dyes that do not usually have high stability or that are photolabile and/or thermolabile and/or sensitive to oxidation and/or reduction or hydrolysis. Among these dyes, particularly interesting are those fluorescent, and/or thermocromic and/or photocromisc because of their commercial applications.

It has to be considered that the process according to the invention is not a surface treatment, but a full polymeric coating of the lamellar solid intercalated with a dye, in order to obtain a microcapsule, with a spherical morphology and uniform size lower than 100 microns. A microcapsule is obtained in which a polymer film completely coats the intercalation compound, without covalently interact with it.

The use of a coating polymer such as polyvinylpyrrolidone (PVP) allows the formation of pendants on the coating surface, able to anchor the microcapsules on particular surfaces, such as cellulose, wood and epoxy resins. Instead the use of a polymer as polyethylene oxide (PEO) allows the formation of pendants suitable for anchoring the microcapsules on metal surfaces. The use of a polymer as polyethylene glycol (PEG) allows the formation of pendants useful for anchoring the microcapsules on polyester substrates. The use of a polymer as polyvinyl alcohol (PVA) allows the formation of pendants suitable for anchoring the microcapsules on polyurethane resins. The use of a polymer as polymethylmethacrylate (PMMA) or polystyrene (PS) allows the formation of pendants suitable for anchoring the microcapsules on rubbers. The use of a silanic polymer allows the formation of pendants suitable for anchoring the microcapsules on glass or ceramic surfaces.

The pendants are linked to the polymer film and not directly to the lamella. This procedure is intended to prevent dye leakage, to obtain greater stability of the dye toward mechanical stress and wear and to have at the same time a stable bond to particular surfaces.

The microcapsule dimension ranging between 1 and 50 microns, and the average particle size is in the order of 1-10 microns, because the particles must cling to the surfaces without altering the tactile sensation (the size must be below <100 microns in order to avoid the alteration of the tactile sensation) and at the same time without penetrating through the stratum corneum once in contact with the human skin (the dimensions in this case must be greater than 1 micron in order to avoid the penetration).

Two additional methods for the surface coating of the intercalation compound have been implemented.

### Second superficial coating method.

Microcapsule preparation is divided in two steps:
1) polymeric coating of the intercalation compound particles (microencapsulation);
2) microcapsules superficial treatment for pendants achievement.
1) Polymeric coating of the intercalation compound particles.

As coating agent for intercalation compound particles was used poly(ethyl) methacrylate (PEMA), bringing to acrylate family, that is a transparent, flexible and water insoluble polymer.

The intercalation compounds coating has been performed by microencapsulation procedure based on the preparation of a oil in water emulsion (O/W). In particular the oil phase (O), or internal phase, is represented by a water immiscible solvent and showing a low boiling point (eg. dichloromethane, chloroform) while the water phase (W), or external phase, is represented by a water solution of polyvinyl alcohol (PVA) al 2% (MW: 30.000-70.000, hydrolyzed 87-90%) used as stabilizing agent of the final emulsion.

Initially PEMA is dissolved in dichloromethane (representing the oil phase-internal phase) then the intercalation compound particles are dispersed in the obtained (intercalation compound/PEMA ratio 1:5 wt./wt.). In order to reduce particle size of the intercalation compound and to favour its encapsulation, the dispersion is sonicated by a sonication bath for about 20 min. The dispersion obtained is successively emulsionated to the external phase (PVA 2% water solution) under magnetic stirring. The O/W ratio is 1:5 v/v.

The obtained emulsion is maintained under magnetic stirring (600 rpm) at room temperature for 12 hours in order to promote organic phase evaporation e to obtain the solid microcapsules.

These are recovered by centrifugation and washed with deionized water.

Figure 8 shows a schematic representation and a image of the scanning electronic microscopy (SEM) of the obtained particles.

Figure 9 shows two images at the optic microscopy of two particles of different color.

### 2) Microcapsules superficial treatment to obtain the pendants.

The monomer PV or the oligomer PVP (PVPK40 type) is solubilized in water using an amount twice the weight of microcapsules (microcapsules/PVP ratio =1/2, wt./wt.). Microcapsules are dispersed in this solution and irradiated, under magnetic stirring for 6 hours in order to obtain a photo induced cross linking. The final product is recovered by centrifugation, washed with deionized water and dried at 37°C.

### Third method of polymer coating

This method allow to obtain the microcapsules by carrying the coating and surface treatment (step 1 and step 2 respectively of the previous method) in a single step.

The procedure followed is the same of the second method, the difference is represented by the composition of the external phase (A) in which is dissolved not only polyvinyl alcohol (PVA) to 2%, as a stabilizing agent of the emulsion, but also PV monomer or oligomer polyvinylpyrrolidone (PVP) in the amount of 2%.

The emulsion is magnetic stirred (600 rpm) irradiating at room temperature for 6 hours, in order to obtain the crosslinking of PVP. The microcapsules obtained are retrieved by centrifugation, washed with deionized water and dried in an oven at 37 ° C.

PEMA and PVP are photocrosslinking polymers that during radiation may reach a close contact. During 6 hours of radiation of the polymers crosslink and gradually solidify, obtaining microcapsules already functionalized with PVP.

Polietilmetacrilato (PEMA, belonging to the family the acrylate) was used for coating of the particles of the intercalation compounds, because it is a transparent, flexible, insoluble in water polymer.

The intercalation compounds were coated using the microencapsulation procedure, that requires the preparation of an oil in water emulsion (O/W). In detail, the oil phase (O) or internal phase, is constituted by a not miscible with water solvent and with a low boiling point (eg dichloromethane, chloroform) while the water phase (A), or external, is represented by an aqueous solution of polyvinyl alcohol (PVA) to 2% (MW: 30,000- 70,000, hydrolyzed 87-90%) used as a stabilizer of the emulsion final and polyvinylpyrrolidone PVP 2%.

PEMA is dissolved in dichloromethane (which represents the oil-internal phase) and, in the obtained solution, are subsequently dispersed particles of the intercalation compound (ratio matrix / polymer 1:5 w / w). The dispersion is sonicated in an ultrasonic bath for about 20 minutes, to reduce the size particles of the intercalation compound, and facilitate the encapsulation. The dispersion obtained is then emulsified, with stirring, to the external phase (aqueous PVA solution at 2% and 2% polyvinylpyrrolidone PVP). The O / E is 1:5 v/v.

The emulsion is left under magnetic stirring (600 rpm), irradiating at room temperature, for 6 hours. The microcapsules obtained are recovered by centrifugation, washed with deionized water and dried in an oven at 37 ° C.

The examples used for the detailed description are reported below.

Example 1. Preparation of zinc aluminum hydrotalcite intercalated with the dye methyl orange.
1 g of ZnAl hydrotalcite-nitrate having the formula [Zn_{0,67}Al_{0,33}(OH)₂](NO₃)_{0.33} * 0.5 H₂O, purchased from Prolabin & Tefarm srl (product code HT-203), is dispersed under magnetic stirring in a 0.15 M aqueous solution (de-ionized and distilled water) containing 0.896 g of 4-dimetilamminoazobenzen-4'-sulfonate sodium (methyl orange) for 18 hours. The resulting solid is separated by filtration (under vacuum with 0.45 micron filter paper) or centrifugation (5 min 4000 rpm / min) and then washed with 100 mL of deionized water until it becomes colorless water (3 washes). Finally the solid is dried at 60 ° C in a ventilated oven for 18 hours. The product obtained (1.5 g), orange coloured, has the following formula:

[Zn_{0,67}Al_{0,33}(OH)₂][(CH₃)₂NPhN₂PhSO₃]_{0.33} * 0.6 H₂O

Example 2. Preparation of zinc aluminum hydrotalcite intercalated with the fluorescein dye.
1 g of ZnAl hydrotalcite-nitrate having the formula [Zn_{0,67}Al_{0,33}(OH)₂](NO₃)_{0.33}*0.5 H₂O, purchased by Prolabin & Tefarm srl, (product code HT-203), is dispersed under magnetic stirring in 100 mL of an aqueous solution (water de-ionized and distilled) of perchlorate sodium containing 3.85 g of sodium perchlorate, for 18 hours. The resulting solid is separated by filtration (under vacuum with 0.45 micron filter paper) or centrifugation (5 min 4000 rpm / min) and subsequently washed with 100 mL of de-ionized water until disappearance of the perchlorate ions in water (3 washes). Finally the solid is dried at 60 ° C in a ventilated oven.

The recovered solid is then dispersed for 24 hours under stirring in 100 mL of an aqueous solution (de-ionized and distilled water) of fluorescein containing 1.21 g of fluorescein acid and 0,146 g of NaOH. The resulting solid is separated by filtration (under vacuum using filter paper 0.45 micron) or centrifugation (5 min at 4000 rpm) and subsequently washed with 100 mL of de-ionized water until disappearance of the color in the water (about 3 washes). Finally the solid is dried at 60 °C in a ventilated oven for 18 hours. The obtained product (1.6 g), of yellow color, has the following formula:

[Zn_{0,67}Al₀,₃₃(OH₂)](C₂₀H₁₁O₅)_{0.33} *0.6 H₂O

Example 3. Preparation of alpha zirconium phosphate intercalated with rhodamine B.
1 g of alpha-zirconium hydrogen phosphate having the formula Zr(HPO₄)₂*H₂O, supplied by Prolabin & Tefarm Ltd, product code ZP-101, is dispersed in 67 mL of de-ionized water. To the dispersion are added slowly and under vigorous stirring 33 mL of a 0.1 M aqueous solution of propylamine. To the dispersion thus obtained are added with stirring 0,795 g of Rhodamine B, the suspension is kept under stirring for 18 hours. The resulting gelatinous solid is separated by centrifugation (10 min at 5000 rpm) and subsequently washed with 100 mL of de-ionized water until neutrality of the waters (3 washes). Finally, the gelatinous solid is dried at 80 °C for 18 hours in a ventilated oven. The obtained product (1.7 g), of pink color, has the following formula:

Zr(HPO₄)_{1.5}[(C₂₈H₃₁N₂O₃)PO₄]₀.₅ *1H₂O

Example 4. Preparation of zinc aluminum hydrotalcite intercalated with methyl orange dye and functionalized according to the method of grafting with the pendant [(phosphonomethyl) amino] acetic acid also known as N-(phosphonomethyl) glycine or glyphosate.
1 g of ZnAl hydrotalcite-nitrate having the formula [Zn_{0, 67}Al_{0, 33}(OH)₂](NO₃)_{0.33} *0.5 H₂O supplied by Prolabin & Tefarm Ltd, product code HT-203, is dispersed under stirring in 100 mL of an aqueous solution (deionized and distilled water) containing 0,070 g of N-(phosphonomethyl) glycine and 0,0166 g of NaOH. The resulting solid is separated by filtration (under vacuum using filter paper 0.45 micron) or centrifugation (5 min 4000 rpm / min) and subsequently washed with 100 mL of de-ionized water until neutrality of the waters (3 washes). Finally the solid is dried at 80 °C for 12 hours in a ventilated oven where the grafting (anchoring) reaction takes place through the reaction between the hydroxyl group of the phosphonate and a hydroxyl of the lamellar solid, which leads to the elimination of a molecule of water and the formation of a polar covalent bond between the phosphonate and the metal of the lamella.
The recovered solid is then dispersed under stirring in an 0.15 M aqueous solution (de-ionized and distilled water) containing 0,864 g of 4-dimethylaminoazobenzen-4'-sulfonate sodium salt (methyl orange or helianthin) for 18 hours. The resulting solid is separated by filtration (under vacuum using filter paper 0.45 micron) or centrifugation (5 min at 4000 rpm) and subsequently washed with 100 mL of de-ionized water until disappearance of the color of the water (about 3 washes).
Finally the solid is dried at 60 °C in a ventilated oven for 18 hours. The obtained product (1.5 g), of intense yellow color, has the following formula:

[Zn_{0,67}Al_{0,33}(OH)_{1.95}][(PO₃)CH₂NHCH₂COOH]_{0.05}[(CH₃)₂NPhN₂PhSO₃]_{0.28}*0.6 H₂O

Example 5. Preparation of zinc aluminum hydrotalcite intercalated with fluorescein dye and functionalized according to the method of grafting with the pendant [(phosphonomethyl) amino] acetic acid also known as N-(phosphonomethyl) glycine or glyphosate.
1 g of ZnAl hydrotalcite-nitrate having the formula [Zn_{0,67}Al_{0,33}(OH)₂](NO₃)_{0.33}*0.5 H₂O supplied by Prolabin & Tefarm Ltd, product code HT-203, is dispersed under stirring in 100 mL of an aqueous solution (de-ionized and distilled water) containing 3.85 g of sodium perchlorate for 18 hours. The resulting solid is separated by filtration (under vacuum using filter paper 0.45 micron) or centrifugation (5 min at 4000 rpm) and subsequently washed with 100 mL of de-ionized water until disappearance of the ions perchlorate in water (approximately 3 washes). Finally the solid is dried at 60 °C in a ventilated oven.
The recovered solid is dispersed under stirring in 100 mL of an aqueous solution (de-ionized and distilled water) containing 0,070 g of N-(phosphonomethyl) glycine and 0,0166 g of NaOH. The resulting solid is separated by filtration (under vacuum using filter paper 0.45 micron) or centrifugation (5 min at 4000 rpm) and subsequently washed with 100 mL of de-ionized water until neutrality of the waters (3 washes). Finally the solid is dried at 80 °C for 12 hours in a ventilated oven where the grafting (anchoring) reaction takes place through the reaction between the hydroxyl group of the phosphonate and a hydroxyl of the lamellar solid, which leads to the elimination of a molecule of water and the formation of a polar covalent bond between the phosphonate and the metal of the lamella.
The recovered solid is then dispersed under stirring in 100 mL of an aqueous solution (de-ionized and distilled water) of fluorescein containing 1,211 g of fluorescein acid and 0,146 g of NaOH for 24 hours. The resulting solid is separated by filtration (under vacuum using filter paper 0.45 micron) or centrifugation (5 min at 4000 rpm) and subsequently washed with 100 mL of deionized water until disappearance of the color of the water (about 3 washes). Finally the solid is dried at 60 °C in a ventilated oven for 18 hours. The obtained product (1.5 g), of yellow color, has the following formula:

[Zn_{0,67}Al_{0,33}(OH)_{1.95}][(PO₃)CH₂NHCH₂COOH]_{0.05}(C₂₀H₁₁O₅)_{0.28}*0,6H₂O

Example 6. Preparation of zinc aluminium hydrotalcite intercalated with fluorescein and coated with polyvinylpyrrolidone through the technique of polymerization by photoinduced crosslinking reaction.
1 g of zinc aluminum hydrotalcite intercalated with fluorescein (example 2) was suspended in 385 ml of aqueous solution (14,4 g/L) of oligomers of 1-vinyl-2-pyrrolidone (5,53 g); the suspension was irradiated, under stirring for 60 minutes, with a UV lamp based on low pressure mercury bulb at 254 nm to induce photocuring. The solution was evaporated at reduced pressure and 60 °C to obtain 6,5 g of yellow solid consisting of particles of hydrotalcite intercalated with fluorescein coated with PVP.

Example 7. Preparation of alpha-zirconium hydrogen phosphate intercalated with rhodamine and coated with polyvinylpyrrolidone through the technique of polymerization by photoinduced crosslinking reaction.
1 g of alpha-zirconium hydrogen phosphate intercalated with rhodamine (Example 3) was suspended in 385 ml of aqueous solution (14,4 g / L) of oligomers of 1-vinyl-2-pyrrolidone (5,53 g); the suspension was irradiated, under stirring for 60 minutes, with a UV lamp based on low pressure mercury bulb at 254 nm to induce photocuring. The solution was evaporated at reduced pressure and 60 °C to obtain 6,5 g of solid pink color consisting of particles of zirconium phosphate intercalated with rhodamine coated with polyvinyl pyrrolidone.

Example 8. Preparation of intercalation compounds consisting of lamellar solid and dye coated with microcapsules through the technique of the second polymeric coating method (2 steps).
500 mg of PEMA are dissolved in 10 ml of dichloromethane under magnetic stirring (600 rpm). In the obtained solution are subsequently dispersed 100 mg of particles of the intercalation compound (ratio intercalation compound/PEMA 1:5 w/w). The dispersion is then sonicated in an ultrasonic bath for 20 minutes and then emulsified, under magnetic stirring (600 rpm), to 40 ml of a 2% aqueous solution of polyvinyl alcohol (PVA) (MW: 30000-70000, hydrolyzed 87-90%).
The obtained emulsion is kept under magnetic stirring (600 rpm) at room temperature for 12 hours until complete evaporation of the organic phase and obtaining of solid microcapsules. The microcapsules are recovered by centrifugation (4000 rpm, 10 min) and washed with deionized water for three times. 100 mg of microcapsules are dispersed under magnetic stirring (600 rpm) in 20 ml of an aqueous solution contaning 200 mg of polyvinylpyrrolidone (PVP) PVPK40 (ratio microcapsules/PVP 1/2 w/w). The dispersion obtained is kept under magnetic stirring (600 rpm) and irradiated (λ = 254 nm) for 6 hours at room temperature. The final product is recovered by centrifugation (4000 rpm, 10 min), washed three times with deionized water and dried in an oven at 37 °C for 12 hours.

Example 9. Preparation of intercalation compounds consisting of lamellar solid and dye coated with microcapsules through the technique of the third polymeric coating method (1 step). 500 mg of PEMA are dissolved in 10 ml of dichloromethane under magnetic stirring (600 rpm). In the obtained solution are subsequently dispersed 100 mg of particles of the intercalation compound (ratio intercalation compound/PEMA 1:5 w/w). The dispersion is then sonicated in an ultrasonic bath for 20 minutes and then emulsified, under magnetic stirring (600 rpm), to 40 ml of an aqueous solution 2 wt% of polyvinyl alcohol (PVA) (MW: 30000-70000, hydrolyzed 87 -90%) and 2 wt% of polyvinylpyrrolidone (PVP, type PVPK40).
The obtained emulsion is kept under magnetic stirring (600 rpm) and irradiated (λ = 254 nm) for 6 hours at room temperature. The final product is recovered by centrifugation (4000 rpm, 10 min), washed three times with deionized water and dried in an oven at 37 °C for 12 hours.

Example 10. Coloring process of a marble surface using zirconium alpha-hydrogen phosphate intercalated with rhodamine and coated with polyvinyl pyrrolidone according to example 8.
A 2.0% aqueous suspension (200 ml) of zirconium alpha-hydrogen phosphate intercalated with rhodamine and coated with polyvinylpyrrolidone (Example 8) was prepared by mixing under stirring 196 ml of water and 4.0 g of dye prepared as described in example 8. This suspension was used for the coloration of a marble surface by using a paint brush, or a spray system or by soaking the marble piece in the suspension. The painted surface was then dried in air at room temperature.

Example 11. Coloring process of a steel surface using zirconium alpha-hydrogen phosphate intercalated with rhodamine and coated with polyvinyl pyrrolidone according to example 8.
An aqueous suspension (98 ml) of isocyanate resin HYDRORENE (SAPICI) was mixed to 2.0 g of zirconium alpha-hydrogen phosphate intercalated with rhodamine and coated with polyvinylpyrrolidone (Example 8). This suspension was used for the coloration of a steel surface by using a paint brush. The painted surface was then dried in air at room temperature.

Example 12. Coloring process of a surface of low density polyethylene using zirconium alpha-hydrogen phosphate intercalated with rhodamine and coated with polyvinyl pyrrolidone according to example 8.
A 2.0% aqueous suspension (200 ml) of zirconium alpha-hydrogen phosphate intercalated with rhodamine and coated with polyvinylpyrrolidone (Example 8) was prepared by mixing under stirring 196 ml of water and 4.0 g of dye prepared as described in example 8. This suspension was used for the coloration of a polyethylene surface previously pretreated with a primer (type HB999 - HYDROFAN MULTIBINDER from LECHLER) by using a paint brush. The suspension can be applied with a paint brush, or a spray system or by directly soaking the polyethylene in the suspension. The coloured surface was then dried in air at room temperature.

## Claims

1. Method for polymeric coating of intercalation compounds consisting of lamellar solids and dyes for coloring and/or staining surfaces and materials of different nature through the following steps:
a) intercalation and/or adsorption of dyes in lamellar solid in order to obtain a lamellar solid intercalated with dyes,
b) polymeric coating of the surface of the said lamellar solid intercalated with dyes in order to obtain a microcapsule totally coated with a polymeric film having an essentially spherical shape and a diameter lower than 100 microns.

2. Method according to claim 1, with a further step of:
c) formation of polymeric pendants bound to the external surface of the said polymeric film coating constituting the microcapsule, which are able to anchor the microcapsule to materials of different nature.

3. Method according to claim 1 or 2, where the said coating step (b) and/or said pendant formation step (c) are carried out through a polymerization technique caused by photo-induced curing (crosslinking) reactions.

4. Method according to claim 3 where the photo-induced crosslinking process is obtained by irradiating an aqueous solution in the UV region.

5. Method according to claim 3 or 4, in which vinyl pyrrolidone monomer (VP) or poly-vinyl-pyrrolidone (PVP) oligomer is used for the said coating step (b) and/or said pendant formation step (c) in order to obtain a coating film and/or pendants made of the crosslinked poly-vinyl-pyrrolidone (PVP) polymer.

6. Method according to claim 5, where both the coating film and the pendants are constituted of crosslinked poly-vinyl-pyrrolidone polymer (PVP) obtained by photo-induced curing (crosslinking) of the vinyl pyrrolidone monomer (VP) or poly-vinyl-pyrrolidone (PVP) oligomer.

7. Method according to claim 6, where the monomer or oligomer weight percentage ranging from 20 to 0.1, preferably from 5 to 0.1, compared to the weight percentage of the lamellar solid intercalated with the dyes.

8. Method according to claim 5, where:
- the coating film is a polymer belonging to the family of the acrylates and is obtained by emulsion of an oil phase (O) and an aqueous phase (W). The oil phase (O) is a solution formed by the polymer dissolved in a solvent immiscible with water and the said lamellar solids intercalated with dyes. The aqueous phase (W) is an aqueous solution formed by a stabilizer and polymers which act as pendant for the anchoring. Such polymers used in the W phase are: crosslinked poly-vinyl-pyrrolidone (PVP) obtained by photo-induced curing (crosslinking) of vinyl-pyrrolidone (VP) monomers, or polyvinyl-pyrrolidone (PVP) oligomers, or thermoplastic polymers, or thermosetting polymers.

9. Method according to claim 8, where the coating film is polyethylmethacrylate (PEMA).

10. Method according to claim 9, where the oil phase (O) is a solution in dichloromethane or chloroform of PEMA, and in the aqueous phase (W) is used as stabilizer the polyvinylalcohol (PVA).

11. Method according to any one of claims 8 to 10, in which the oil phase (O) containing the lamellar solid intercaled with dyes is treated with ultrasounds and the obtained dispersion is emulsified with the aqueous phase (W) through stirring.

12. Method according to any one of the previous claims, in which the lamellar solis is a synthetic hydrotacite having the following general formula:
[M(II)₁₋ₓM(III)ₓ(OH)₂]^{x+}[Aⁿ⁻_{x/n}]^{x-} × mS (I)
where M(II) is a metal of valence (II), preferably selected between Mg, Zn, Co, Ni, Mn, Cu; M (III) is a metal of valence (III) selected among Al, Cr, Fe, V, Co;
Aⁿ⁻ is an anion with charge n, which balances trivalent metal charge and it is preferably chosen among organic anions; m indicates the number of solvent molecules (generally water) co-intercalated (S). M(III) moles on the compound generally ranges between 0.20 and 0.40 and its value determines the layer charge density and the anion exchange capacity. The moles of co-intercalated solvent, m, ranges between 0 and 2, depending on the nature of A and on the degree of intercalation.

13. Method according to any one of claims 1 to 11, in which the lamellar solis is a zirconium phosphate in the forms alpha and gamma and having the followings general formulas:
alpha: Zr(HPO₄)₂₋ₙₓ (Bⁿ⁺PO₄)ₓₙ] •H₂O
gamma: Zr(PO₄)(H₂PO₄)₁₋ₙₓ (Bⁿ⁺HPO₄)ₓₙ•2H₂O
where B is a generic cationic dye having generic of formula Bⁿ⁺ and net charge equal to n and preferably chosen among organic cations. The number of moles x in the formula generally ranges between 0.1 and 2 in the alpha phosphates and it is comprised between 0.1 and 1 in the gamma phosphate.

14. Method according to any one of claims 1 to 13, in which the dyes are are thermo-chromic or photo-chromic.

15. Method according to any one of claims 1 to 13, in which the dyes are are fluorescent.
